(19) Europäisches Patentamt
European Patent Office
Office européen des brevets

(11) EP 0 811 640 A1

(12) EUROPÄISCHE PATENTANMELDUNG

(43) Veröffentlichungstag: **10.12.1997 Patentblatt 1997/50**

(51) Int. Cl.[6]: **C08F 4/02**, C08F 10/00, C08F 4/60

(21) Anmeldenummer: **97108455.3**

(22) Anmeldetag: **26.05.1997**

(84) Benannte Vertragsstaaten: **BE DE ES FR GB IT NL**

(30) Priorität: **05.06.1996 DE 19622481**

(71) Anmelder: **HOECHST AKTIENGESELLSCHAFT 65929 Frankfurt am Main (DE)**

(72) Erfinder: **Fritze, Cornelia, Dr. 60529 Frankfurt (DE)**

# (54) Geträgertes Katalysatorsystem, Verfahren zu seiner Herstellung und seine Verwendung zur Polymerisation von Olefinen

(57) Die vorliegende Erfindung betrifft ein Geträgertes Katalysatorsystem, das mindestens eine Metallocenkomponente, mindestens eine Cokatalysatorkomponente und mindestens ein modifiziertes anorganisches Oxid von Silizium, Aluminium oder Gemischen davon enthält, wobei das modifizierte Oxid mindestens eine der Gruppen Stickstoff, Fluor, Phosphor oder Schwefel enthaltende organische Silizium-Reste enthält.

EP 0 811 640 A1

## Beschreibung

Die vorliegende Erfindung betrifft ein hochaktives geträgertes Katalysatorsystem, das vorteilhaft bei der Olefinpolymerisation eingesetzt werden kann und ein Verfahren zu seiner Herstellung sowie Polymere, die mit dem geträgerten Katalysatorsystem hergestellt werden.

Verfahren zur Herstellung von Polyolefinen mit Hilfe von löslichen, homogenen Katalysatorsystemen sind bekannt, bestehend aus einer Übergangsmetallkomponente vom Typ eines Metallocens und einer Cokatalysatorkomponente vom Typ eines Aluminoxans, einer Lewis-Säure oder einer ionischen Verbindung. Diese Katalysatoren liefern bei hoher Aktivität Polymere und Copolymere mit enger Molmassenverteilung.

Bei Polymerisationsverfahren mit löslichen, homogenen Katalysatorsystemen bilden sich starke Beläge an Reaktorwänden und Rührer aus, wenn das Polymer als Feststoff anfällt. Diese Beläge entstehen immer dann durch Agglomeration der Polymerpartikel, wenn Metallocen und/oder Cokatalysator gelöst in der Suspension vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern. Weiterhin sind homogene Katalysatorsysteme nicht für die Herstellung von Polyolefinen in der Gasphase einsetzbar. Zur Vermeidung der Belagsbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden.

Aus der EP-A-576970 ist ein Katalysatorsystem bekannt, das ein Metallocen der Formel

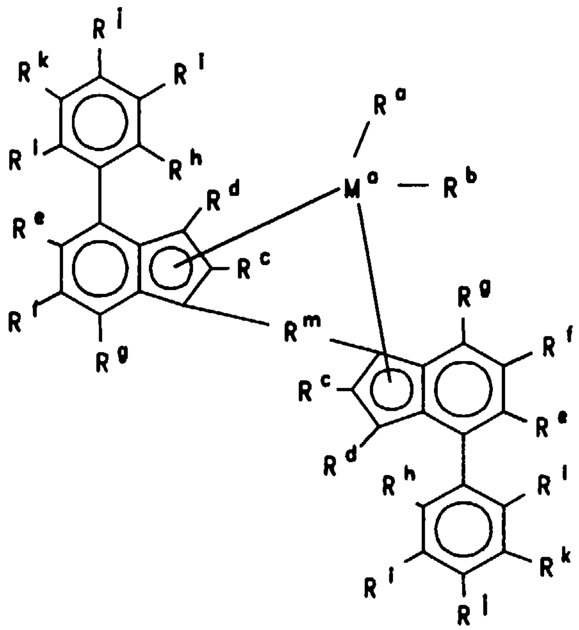

enthält, worin

$M^a$ ein Metall der Gruppe IVb, Vb oder VIb des Periodensystems ist, $R^a$ und $R^b$ gleich oder verschieden sind und ein Wasserstoffatom, eine $C_1$-$C_{10}$-Alkyl-, eine $C_1$-$C_{10}$-Alkoxy-, eine $C_6$-$C_{10}$-Aryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, eine $C_8$-$C_{40}$-Arylalkenyl-, eine OH-Gruppe oder ein Halogenatom bedeuten, die Reste $R^c$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, eine $-NR^p_2$, $-SR^p$, $-OSiR^p_3$-, $-SiR^p_3$- oder $-PR^p_2$-Rest bedeuten, worin $R^p$ ein Halogenatom, eine $C_1$-$C_{10}$-Alkylgruppe oder eine $C_6$-$C_{10}$-Arylgruppe ist, $R^d$ bis $R^l$ gleich oder verschieden sind und die für $R^c$ genannten Bedeutungen besitzen, oder benachbarte Reste $R^d$ bis $R^l$ mit den sie verbindenden Atomen einen oder mehrere aromatische oder aliphatische Ringe bilden, oder die Reste $R^e$ und $R^h$ oder $R^l$ mit den sie verbindenden Atomen einen aromatischen oder aliphatischen Ring bilden, $R^m$

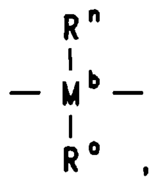 , 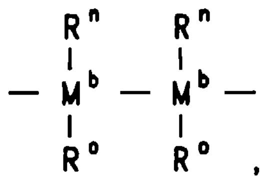 , 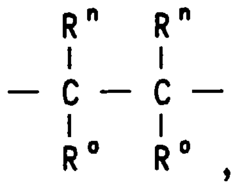 , 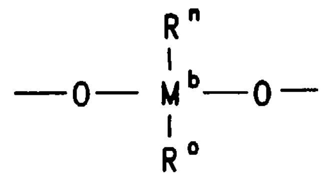 ,

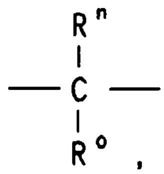 , 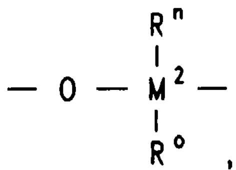 , 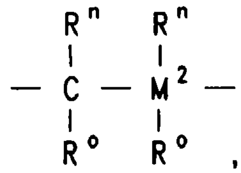 , 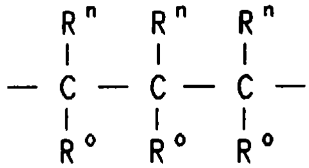 ,

$>BR^n$, $>AlR^n$, -Ge-, -Sn-, -O-, -S-, >SO, $>NR^n$, >CO, $>PR^n$ oder $>P(O)R^n$ ist, wobei $R^n$ und $R^o$ gleich oder verschieden sind und ein Wasserstoffatom, ein Halogenatom, eine $C_1$-$C_{10}$-Alkyl-, eine $C_1$-$C_{10}$-Fluoralkyl-, eine $C_1$-$C_{10}$-Alkoxy-, eine $C_6$-$C_{10}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, eine $C_8$-$C_{40}$-Arylalkenylgruppe bedeuten, oder $R^n$ und $R^o$ jeweils mit den sie verbindenden Atomen einen oder mehrere Ringe bilden und $M^b$ Silizium, Germanium oder Zinn ist und einen geträgerten Cokatalysator enthält. Mit diesem geträgerten Katalysatorsystem wird isotaktisches Polypropylen mit einer Aktivität von 50 bis 540 kg PP/g Metallocen xh bei einem Al: Zr-Verhältnis von >400 : 1 erhalten.

In der EP-A-287666 wird ein Verfahren zur Polymerisation von Olefinen in Gegenwart eines Katalysators beschrieben, der aus einer Übergangsmetallverbindung, einem Aluminoxan, einer Organoaluminiumverbindung mit einer anderen Kohlenwasserstoffgruppe als n-Alkylgruppen und einem anorganischen Träger, der mit einer Organometallverbindung oder einer halogenenthaltenen Siliconverbindung modifiziert sein kann, als feste Katalysatorkomponente besteht, wobei die Übergangsmetallverbindung angegeben wird durch die Formel

$$R^q_k\ R^r_l\ R^s_m\ R^t_n\ Me,$$

worin $R^q$ eine Cycloalkadienylgruppe bedeutet, $R^r$, $R^s$ und $R^t$ gleich oder verschieden sind und jeweils eine Cycloalkadienylgruppe, eine Arylgruppe, eine Alkylgruppe, eine Arylalkylgruppe, ein Halogenatom oder ein Wasserstoffatom bedeuten, Me Zirkonium, Titan oder Hafnium bedeutet, k 1, 2, 3 oder 4 ist, l, m und n 0, 1, 2 oder 3 sind und $k + l + m + n = 4$ ist. Die zur Modifizierung des anorganischen Trägers eingesetzten halogenhaltigen Siliconverbindungen werden angegeben durch die Formel

$$SiY_d\ R^u_e\ (OR^v)_{4-d-e}$$

worin Y ein Chlor- oder ein Bromatom bedeutet, $R^u$ und $R^v$ unabhängig voneinander eine Alkylgruppe mit 1 bis 12 Kohlenstoffatomen, eine Aryl- oder eine Cycloalkylgruppe mit 3 bis 12 Kohlenstoffatomen bedeuten, d 1 bis 4 und e 0 bis 4 ist und d + e 1 bis 4 ist. Mit diesem Verfahren werden Polymere mit guten Ausbeuten erhalten.

In EP-A-206794 werden zur chemischen Modifizierung der Hydroxylgruppen auf einer Trägeroberfläche beispielsweise $SiCl_4$, Chlorosilane wie Trimethylchlorosilan oder Dimethylaminotrimethylsilan genannt. Es wird eine gute Polymerisationsaktivität erhalten.

EP-A-553491 offenbart einen Katalysator für die Polymerisation von Olefinen bestehend aus einer geträgerten Übergangsmetallverbindung charakterisiert durch ein kohlenstoffverbrücktes biscyclopentadienylanaloges Ligandsystem und ein Aluminoxan. Die verwendetete anorganische Trägerkomponente wird mit einer organischen oder anorganischen Verbindung modifiziert, um den Gehalt an Hydroxylgruppen auf der Oberfläche zur reduzieren. Beispielsweise werden dazu Organoaluminium-, Organomagnesium- oder Organosiliconverbindungen wie Trimethylsilan oder Dimethyldichlorosilan verwendet. Es werden Polymere in guten Ausbeuten und guter Pulvermorphologie erhalten.

In DE 4406964 wird ein geträgertes Katalysatorsystem beansprucht, das durch die Umsetzung eines feinteiligen Trägers mit einer α-Trialkoxy-ω-halogenalkylverbindung mit einem Metallocen mit heterofunktionellen Gruppen als Cyclopentadienylsystem und dann mit einem quaternisierenden Agens und gegebenenfalls mit einer Aluminoxanverbindung hergestellt wird. Diese Katalysatorsysteme eignen sich zur Herstellung von Polyolefinen.

Die Aufgabe der vorliegenden Erfindung liegt darin, ein geträgertes Katalysatorsystem mit besonders hoher Aktivität und ein umweltschonendes und wirtschaftliches Verfahren zur Herstellung von Polymeren bereitzustellen.

Die der vorliegenden Erfindung zugrundeliegende Aufgabe wird durch ein geträgertes Katalysatorsystem gelöst, das mindestens eine Metallocenkomponente, mindestens eine Cokatalysatorkomponente und mindestens ein modifiziertes anorganisches Oxid von Silizium, Aluminium oder Gemischen davon enthält, wobei das modifizierte Oxid mindestens eine der Gruppen Stickstoff, Fluor, Phosphor oder Schwefel enthaltende organische Silizium-Reste enthält.

Das Katalysatorsystem wird erfindungsgemäß hergestellt, in dem mindestens ein Metallocen und mindestens ein modifizierter Träger gemischt werden.

Als Metallocenkomponente des erfindungsgemäßen Katalysatorsystems kann grundsätzlich jedes Metallocen dienen. Bevorzugt sind chirale Metallocene. Darüber hinaus können weitere Substituenten, wie z.B. Halogen-, Alkyl-, Alkenyl-, Alkoxy-, Aryl- oder Alkylaryl-Gruppen an das Metallzentralatom gebunden sein. Das Metallzentralatom ist bevorzugt ein Element der III., IV., V. oder VI. Nebengruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl, Indenyl, 2-Methylidenyl, 2-Methyl-4-phenylindenyl, Tetrahydroindenyl, Benzoindenyl, Fluorenyl, Benzofluorenyl, Tetrahydrofluorenyl, Octahydrofluorenylreste zu verstehen. Die $\pi$-Liganden, z.B. Cyclopentadienylliganden können verbrückt oder unverbrückt sein, wobei einfache und mehrfache Verbrückungen - auch über Ringsysteme - möglich sind. Die Bezeichnung Metallocen umfaßt auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkerniger Metallocene können sowohl gleichartig als auch voneinander verschieden sein. Beispiele solcher mehrkerniger Metallocene sind z.B. beschrieben in (EP-A-632063, JP-A-04/80214, JP-A-04/85310, EP-A-654476).

Die Bezeichnung Metallocen umfaßt außerdem Monocyclopentadienylsystem wie verbrückte Cyclopentadienylamido-Komplexe.

Bevorzugt sind Metallocene der Gruppe IVb des Periodensystems der Elemente, wie Titan, Zirkonium oder Hafnium, besonders bevorzugt ist Zirkonium.

Es handelt sich bevorzugt um Metallocene der nachstehenden Formel I

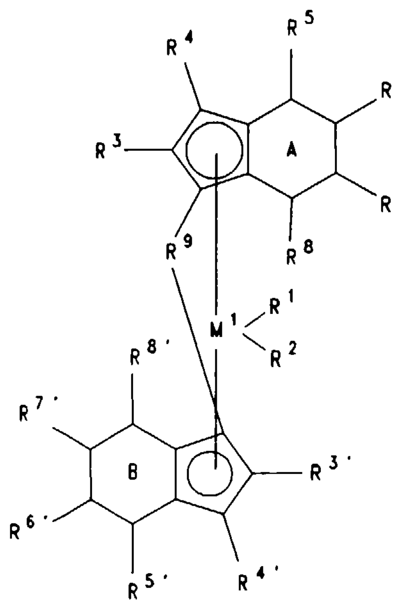

( I )

worin

$M^1$ ein Metall der Gruppe IVb des Periodensystems der Elemente ist,

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{20}$-Arylgruppe, eine $C_6$-$C_{10}$-Aryloxygruppe, eine $C_2$-$C_{10}$-Alkenylgruppe, eine OH-Gruppe, eine $NR^{12}_2$-Gruppe, wobei $R^{12}$ eine $C_1$-$C_{10}$-Alkylgruppe oder $C_6$-$C_{14}$-Arylgruppe ist, oder ein Halogenatom bedeuten,

$R^3$ bis $R^8$ und $R^{3'}$ bis $R^{8'}$ gleich oder verschieden sind und ein Wasserstoffatom, eine $C_1$-$C_{40}$-Kohlenwasserstoffgruppe, die linear, cyclisch oder verzweigt sein kann, wie eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe, bedeuten, oder benachbarte Reste $R^4$ bis $R^8$ und/oder $R^{4'}$ bis $R^{8'}$ mit den sie verbindenden Atomen ein Ringsystem bilden,

$R^9$ eine Verbrückung bedeutet, bevorzugt

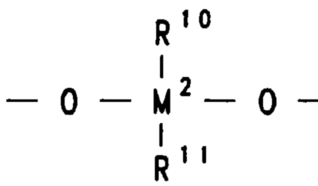, 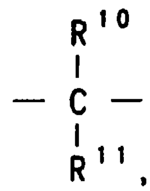, 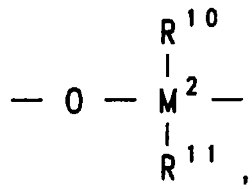, 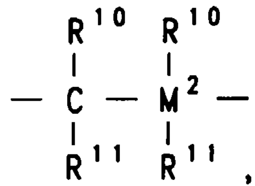,

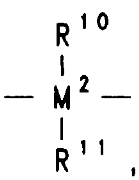, 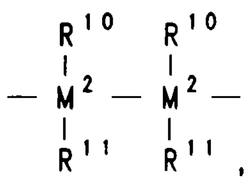, 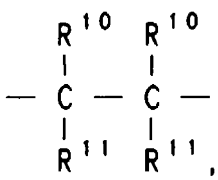, 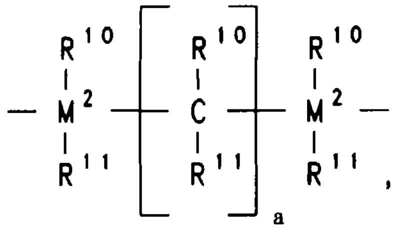,

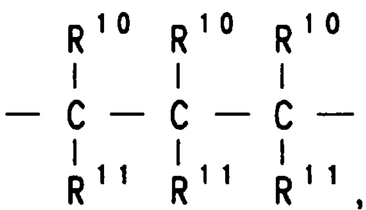,

wobei $R^{10}$ und $R^{11}$ gleich oder verschieden sind und ein Wasserstoffatom, ein Halogenatom oder eine $C_1$-$C_{40}$-kohlenstoffhaltige Gruppe ist wie eine $C_1$-$C_{20}$-Alkyl-, eine $C_1$-$C_{10}$-Fluoralkyl-, eine $C_1$-$C_{10}$-Alkoxy-, eine $C_6$-$C_{14}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe oder $R^{10}$ und $R^{11}$ jeweils mit den sie verbindenden Atomen einen oder mehrere Ringe bilden und a eine ganze Zahl von Null bis 18 ist,
$M^2$ Silizium, Germanium oder Zinn ist, und die Ringe A und B gleich oder verschieden, gesättigt oder ungesättigt sind.
$R^9$ kann auch zwei Einheiten der Formel I miteinander verknüpfen.

Die den Verbindungen I entsprechenden 4,5,6,7-Tetrahydroindenylanaloga sind ebenfalls von Bedeutung.
In Formel I gilt bevorzugt, daß

$M^1$ Zirkonium ist,
$R^1$ und $R^2$ gleich sind und für Methyl oder Chlor, insbesondere Chlor, stehen und
$R^9 = M^2R^{10}R^{11}$ ist, worin $M^2$ Silizium oder Germanium ist und $R^{10}$ sowie $R^{11}$ eine $C_1$-$C_{20}$-Kohlenwasserstoffgruppe, wie $C_1$-$C_{10}$-Alkyl oder $C_6$-$C_{14}$-Aryl ist,
$R^5$ und $R^{5'}$ bevorzugt gleich oder verschieden sind und eine $C_6$-$C_{10}$-Arylgruppe, eine $C_7$-$C_{10}$-Arylalkylgruppe, eine $C_7$-$C_{40}$-Alkylarylgruppe oder eine $C_8$-$C_{40}$-Arylalkenylgruppe bedeuten.

Die Indenyl- bzw. Tetrahydroindenylliganden der Metallocene der Formel I sind bevorzugt in 2-, 2,4-, 4,7-, 2,6-, 2,4,6-, 2,5,6-, 2,4,5,6- und 2,4,5,6,7-Stellung, insbesondere in 2,4-Stellung, substituiert. Bevorzugte Substituenten sind eine $C_1$-$C_4$-Alkylgruppe wie z. B. Methyl, Ethyl oder Isopropyl oder eine $C_6$-$C_{10}$-Arylgruppe wie Phenyl, Naphthyl oder Mesityl. Die 2-Stellung ist bevorzugt durch eine $C_1$-$C_4$-Alkylgruppe, wie Methyl, Ethyl oder Isopropyl substituiert.

Besonders bevorzugt sind Zirconocene, die Tetrahydroindenylderivate und Indenylderivate als Liganden tragen.

Von besonderer Bedeutung sind weiterhin Metallocene der Formel I, bei denen die Substituenten in 4- und 5-Stellung der Indenylreste ($R^5$ und $R^6$ sowie $R^{5'}$ und $R^{6'}$) zusammen mit den sie verbindenden Atomen ein Ringsystem bilden, bevorzugt einen Sechsring. Dieses kondensierte Ringsystem kann ebenfalls durch Reste in der Bedeutung von $R^3$ - $R^8$ substituiert sein. Beispielhaft für solche Verbindungen I ist Dimethylsilandiylbis(2-methyl-4,5-benzoindenyl)zirkoniumdichlorid zu nennen.

Insbesondere bevorzugt sind solche Verbindungen der Formel I, die in 4-Stellung eine $C_6$-$C_{20}$-Arylgruppe und in 2-Stellung eine $C_1$-$C_4$-Alkylgruppe tragen. Beispielhaft für solche Verbindungen der Formel I ist Dimethylsilandiylbis(2-methyl-4-phenylindenyl)zirkoniumdichlorid.

Beispiele für die Metallocenkomponente des erfindungsgemäßen Katalysatorsystems sind:

Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-ethyl-4-(1-naphthyl)indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4-$\alpha$-acenaphthyl-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiylbis(2-isopropyl-4-(-1-naphthyl)-indenyl)zirkoniumdichlorid
Dimethylsilandiylbis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-tert.-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdichlorid
Methyl(phenyl)silandiylbis(2-methyl-4,5-(tetramethylbenzo)-indenyl)zirkoniumdichlorid
Methyl(phenyl)silandiylbis(2-methyl-4-$\alpha$-acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
Bis(butylcyclopentadienyl)$Zr^+$ $CH_2CHCHCH_2B^-(C_6F_5)_3$
Bis(methylindenyl)$Zr^+$ $CH_2CHCHCH_2B^-(C_6F_5)_3$
Dimethylsilandiylbis(2-methyl-4,5-benzo-indenyl)$Zr^+$ $CH_2CHCHCH_2B^-(C_6F_5)_3$
1,2-Ethandiylbis(2-methyl-indenyl)$Zr^+$ $CH_2CHCHCH_2B^-(C_6F_5)_3$
1,4-Butandiylbis(2-methyl-indenyl)$Zr^+$ $CH_2CHCHCH_2B^-(C_6F_5)_3$
Dimethylsilandiylbis(2-methyl-4,6-diisopropyl-indenyl)$Zr^+$ $CH_2CHCHCH_2B^-(C_6F_5)_3$
Dimethylsilandiylbis(2-ethyl-4-phenyl-indenyl)$Zr^+$ $CH_2CHCHCH_2B^-(C_6F_5)_3$
Dimethylsilandiylbis(2-methyl-4-phenyl-indenyl)$Zr^+$ $CH_2CHCHCH_2B^-(C_6F_5)_3$
Methyl(phenyl)silandiylbis(2-methyl-4-phenyl-indenyl)$Zr^+$ $CH_2CHCHCH_2B^-(C_6F_5)_3$
Dimethylsilandiylbis(2-methyl-indenyl)$Zr^+$ $CH_2CHCHCH_2B^-(C_6F_5)_3$

Dimethylsilandiylbis(indenyl)Zr $^{+}$ $CH_2CHCHCH_2B^{-}(C_6F_5)_3$
Dimethylsilandiyl(tert.-Butylamido)(tetramethylcyclopentadienyl)zirkoniumdichlorid
[Tris(pentafluorophenyl)(cyclopentadienyliden)borato](cyclopentadienyl)-1,2,3,4-tetraphenylbuta-1,3-dienylzirkonium
Dimethylsilandiyl-[tris(pentafluorophenyl)(2-methyl-4-phenylindenyliden)-borato](2-methyl-4-phenylindenyl)-1,2,3,4-tetraphenylbuta-1,3-dienylzirkonium
Dimethylsilandiyl-[tris(trifluoromethyl)(2-methylbenzindenyliden)borato](2-methylbenzindenyl-)-1,2,3,4-tetraphenylbuta-1,3-dienylzirkonium
Dimethylsilandiyl-[tris(pentafluorophenyl)(2-methyl-indenyliden)borato](2-methyl-indenyl)-1,2,3,4-tetraphenylbuta-1,3-dienylzirkonium
Dimethylsilandiylbis(indenyl)zirkoniumdimethyl
Dimethylsilandiylbis(4-naphthyl-indenyl)zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis(2-methyl-4-(1-naphthyl)-indenyl)zirkoniumdimethyl
Dimethylsilandiylbis(2-methyl-4-(2-naphthyl)-indenyl)zirkoniumdimethyl
Dimethylsilandiylbis(2-methyl-4-phenyl-indenyl)zirkoniumdimethyl
Dimethylsilandiylbis(2-methyl-4-t-butyl-indenyl)zirkoniumdimethyl
Dimethylsilandiylbis(2-methyl-4-isopropyl-indenyl)zirkoniumdimethyl
Dimethylsilandiylbis(2-methyl-4-ethyl-indenyl)zirkoniumdimethyl
Dimethylsilandiylbis(2-methyl-4-α-acenaphth-indenyl)zirkoniumdimethyl
Dimethylsilandiylbis(2,4-dimethyl-indenyl)zirkoniumdimethyl
Dimethylsilandiylbis(2-ethyl-indenyl)zirkoniumdimethyl
Dimethylsilandiylbis(2-ethyl-4-ethyl-indenyl)zirkoniumdimethyl
Dimethylsilandiylbis(2-ethyl-4-phenyl-indenyl)zirkoniumdimethyl
Dimethylsilandiylbis(2-methyl-4,5-benzo-indenyl)zirkoniumdimethyl
Dimethylsilandiylbis(2-methyl-4,6-diisopropyl-indenyl)zirkoniumdimethyl
Dimethylsilandiylbis(2-methyl-4,5-diisopropyl-indenyl)zirkoniumdimethyl
Dimethylsilandiylbis(2,4,6-trimethyl-indenyl)zirkoniumdimethyl
Dimethylsilandiylbis(2,5,6-trimethyl-indenyl)zirkoniumdimethyl
Dimethylsilandiylbis(2,4,7-trimethyl-indenyl)zirkoniumdimethyl
Dimethylsilandiylbis(2-methyl-5-isobutyl-indenyl)zirkoniumdimethyl
Dimethylsilandiylbis(2-methyl-5-t-butyl-indenyl)zirkoniumdimethyl
Dimethylsilandiyl(tert.-butylamido)(cyclopentadienyl)titandimethyl
Dimethylsilandiyl(tert.-butylamido)(indenyl)zirkoniumdimethyl
Dimethylsilandiyl(tert.-butylamido)(indenyl)titandimethyl
Dimethylsilandiyl(cyclohexylamido)(indenyl)titandimethyl
Dimethylsilandiyl(cyclohexylamido)(cyclopentadienyl)titandimethyl
Dimethylsilandiyl(cyclohexylamido)(methylcyclopentatienyl)zirkoniumdimethyl
Dimethylsilandiyl(cyclohexylamido)(methylcyclopentadienyl)titandimethyl
Methyl(phenyl)silandiylbis(2-methyl-4-phenyl-indenyl)zirkoniumdimethyl
Methyl(phenyl)silandiylbis(2-methyl-4,6-diisopropyl-indenyl)zirkoniumdimethyl
Methyl(phenyl)silandiylbis(2-methyl-4-isopropyl-indenyl)zirkoniumdimethyl
Methyl(phenyl)silandiylbis(2-methyl-4,5-benzo-indenyl)zirkoniumdimethyl
Methyl(phenyl)silandiylbis(2-methyl-4,5-(methylbenzo)indenyl)zirkoniumdimethyl
Methyl(phenyl)silandiylbis(2-methyl-4,5-(tetramethylbenzo)-indenyl)zirkoniumdimethyl
Methyl(phenyl)silandiylbis(2-methyl-4-α-acenaphth-indenyl)zirkoniumdimethyl
Methyl(phenyl)silandiylbis(2-methyl-indenyl)zirkoniumdimethyl
Methyl(phenyl)silandiylbis(2-methyl-5-isobutyl-indenyl)zirkoniumdimethyl
1,2-Ethandiylbis(2-methyl-4-phenyl-indenyl)zirkoniumdimethyl
1,4-Butandiylbis(2-methyl-4-phenyl-indenyl)zirkoniumdimethyl
1,2-Ethandiylbis(2-methyl-4,6-diisopropyl-indenyl)zirkoniumdimethyl
1,4-Butandiylbis(2-methyl-4-isopropyl-indenyl)zirkoniumdimethyl
1,4-Butandiylbis(2-methyl-4,5-benzo-indenyl)zirkoniumdimethyl
1,2-Ethandiylbis(2-methyl-4,5-benzo-indenyl)zirkoniumdimethyl
1,2-Ethandiylbis(2,4,7-trimethyl-indenyl)zirkoniumdimethyl
1,2-Ethandiylbis(2-methyl-indenyl)zirkoniumdimethyl
1,4-Butandiylbis(2-methyl-indenyl)zirkoniumdimethyl

Besonders bevorzugt sind:

Dimethylsilandiylbis(2-methyl-indenyl)zirkoniumdichlorid,
Dimethylsilandiylbis(2-methyl-4-(1-naphthyl)-indenyl)zirkoniumdichlorid,
Dimethylsilandiylbis(2-methyl-4-phenyl-indenyl)zirkoniumdichlorid,
Dimethylsilandiylbis(2-methyl-4-α-acenaphth-indenyl)zirkoniumdichlorid,
Dimethylsilandiylbis(2-ethyl-4-phenyl-indenyl)zirkoniumdichlorid,
Dimethylsilandiylbis(2-methyl-4,5-benzo-indenyl)zirkoniumdichlorid,
Dimethylsilandiylbis(2-methyl-4,6-diisopropyl-indenyl)zirkoniumdichlorid.

Herstellungsverfahren für Metallocene der Formel I sind in Journal of Organometallic Chem. 288 (1985) 63 - 67 und der dort zitierten Dokumente beschrieben.

Das erfindungsgemäße Katalysatorsystem enthält vorzugsweise zusätzlich mindestens einen Cokatalysator.

Die Cokatalysatorkomponente, die erfindungsgemäß im Katalysatorsystem enthalten sein kann, enthält mindestens eine Verbindung vom Typ eines Aluminoxans oder einer Lewis-Säure oder einer ionischen Verbindung, die durch Reaktion mit einem Metallocen dieses in eine kationische Verbindung überführt.

Als Aluminoxan wird bevorzugt eine Verbindung der allgemeinen Formel II

$$(R'\,AlO)_p \qquad (II)$$

verwendet. Aluminoxane können beispielsweise cyclisch wie in Formel III

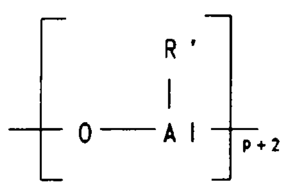

(III)

oder linear wie in Formel IV

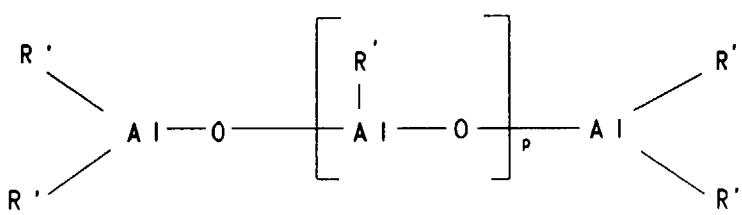

(IV)

oder vom Cluster-Typ wie in Formel V sein, vgl. JACS 117 (1995), 6465-74, Organometallics 13 (1994), 2957-2969.

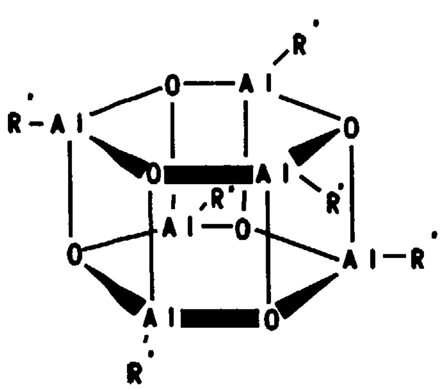

(V)

Die Reste R' in den Formeln (II), (III), (IV) und (V) können gleich oder verschieden sein und eine $C_1$-$C_{20}$-Kohlenwasserstoffgruppe wie eine $C_1$-$C_6$-Alkylgruppe, eine $C_6$-$C_{18}$-Arylgruppe, Benzyl oder Wasserstoff bedeuten, und p eine ganze Zahl von 2 bis 50, bevorzugt 10 bis 35 bedeuten.

Bevorzugt sind die Reste R' gleich und bedeuten Methyl, Isobutyl, n-Butyl, Phenyl oder Benzyl, besonders bevorzugt Methyl.

Sind die Reste R' unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R') enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R' werden entsprechend der gewünschten Zusammensetzung und Reaktivität zwei verschiedene Aluminiumtrialkyle ($AlR'_3$ + $AlR''_3$) mit Wasser umgesetzt (vgl. S. Pasynkiewicz, Polyhedron 9 (1990) 429 und EP-A-302424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die $C_1$-$C_{20}$-kohlenstoffhaltige Gruppen enthalten, wie verzweigte oder unverzweigte Alkyl- oder Halogenalkyl, wie Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Besonders bevorzugt sind bororganische Verbindungen.

Beispiele für Lewis-Säuren sind Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, $SbF_6^-$, $CF_3SO_3^-$ oder $ClO_4^-$. Als kationisches Gegenion werden Lewis-Basen wie Methylamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind

Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.

Bevorzugt sind Triphenylcarbeniumtetrakis(pentafluorophenyl)borat und/oder N,N-Dimethylaniliniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie 7,8-Dicarbaundecaboran(13), Undecahydrid-7,8-dimethyl-7,8-dicarbaundecaboran,

Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III)
von Bedeutung.

Die Trägerkomponente des erfindungsgemäßen Katalysatorsystems ist ein modifizierter organischer oder anorganischer Träger, bevorzugt wird mindestens ein anorganisches Oxid, das an seiner Oberfläche reaktive Gruppen, wie OH-Gruppen besitzt, mit einer N-, F-, P- und/oder S-enthaltenen Substanz umgesetzt. Ein anorganisches Oxid kann beispielsweise $SiO_2$, $Al_2O_3$, MgO, $ZrO_2$, $TiO_2$, $B_2O_3$, CaO, ZnO, $ThO_2$, $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$ $Na_2O$, $K_2O$, $Li_2O$ sein. Insbesondere bevorzugt ist Siliziumoxid und/oder Aluminiumoxid. Der modifizierte Träger weist eine spezifische Oberfläche im Bereich von 10 bis 1000 $m^2/g$, bevorzugt von 150 bis 500 $m^2/g$, besonders bevorzugt von 200 bis 400 $m^2/g$ auf. Die mittlere Partikelgröße des Trägers ist von 1 bis 500 µm, bevorzugt von 5 bis 350 µm, besonders bevorzugt von 10 bis 200 µm. Das Porenvolumen des Trägers ist von 0,5 bis 4,0 ml/g, bevorzugt von 1,0 bis 3,5 ml/g, ganz besonders bevorzugt von 1,2 bis 3 ml/g. Die poröse Struktur des Trägers bewirkt einen Anteil an Hohlräumen (Porenvolumen) im Trägerpartikels, des Trägermaterials oder des Träger-Formkörpers.

Die Form der Poren ist unregelmäßig, häufig sphärisch ausgebildet. Die Poren sind durch kleine Porenöffnungen miteinander zum Teil verbunden. Der Porendurchmesser beträgt etwa 2 bis 100 nm.

Die Partikelform des porösen Trägers ist abhängig von der Modifizierung und kann irregulär oder sphärisch sein. Die Träger-Teilchengrößen können z. B. durch kryogene Mahlung und/oder Siebung beliebig eingestellt werden.

Der erfindungsgemäße modifizierte Träger wird aus der Umsetzung eines oder mehrerer anorganischer Oxide erhalten, bevorzugt Siliziumoxid und/oder Aluminiumoxid mit einer bevorzugt siliziumorganischen Verbindung, die N-, F-, P- und/oder S-Gruppen enthält. Diese Verbindung reagiert mit den reaktiven Gruppen auf der Oberfläche des Trägers, bevorzugt mit OH-Gruppen. Dadurch wird erreicht man eine Reduzierung des Anteils der für das katalytisch aktive System desaktivierenden OH-Gruppen auf der Oberfläche des Trägers und somit eine Aktivitätssteigerung des Katalysatorsystems.

Der erfindungsgemäße Träger wird bei 100°C bis 800°C bei 0.01 bar bis 0.001 bar oder bei 100°C bis 800°C im Inertgasstrom für 5-45 h getrocknet, um physisorbiertes Wasser zu entfernen. Das so getrocknete Trägermaterial wird mit mindestens einer siliziumorganischen Verbindung der Formel VI umgesetzt.

$$SiR^{13}_w R^{14}_x R^{15}_y R^{16}_z \qquad (VI)$$

worin $R^{13}$, $R^{14}$, $R^{15}$, $R^{16}$ unabhängig voneinander gleich oder verschieden eine $C_1$-$C_{20}$-kohlenwasserstoffhaltige Gruppe, wie zum Beispiel eine $C_1$-$C_{20}$-Alkylgruppe, $C_2$-$C_{20}$-Alkenylgruppe, eine $C_5$-$C_{30}$-Arylgruppe, eine $C_5$-$C_{30}$-Arylalkylgruppe, eine $C_5$-$C_{30}$-Arylalkenylgruppe, eine $C_5$-$C_{30}$-Alkylarylgruppe, eine $C_1$-$C_{20}$-Alkyloxygruppe, eine $C_1$-$C_{20}$-Alkenyloxygruppe, $C_5$-$C_{30}$-Aryloxygruppe, $C_1$-$C_{20}$-Alkoxyalkylgruppe, $C_5$-$C_{30}$-Alkylaryloxygruppe, $C_5$-$C_{30}$-Arylalkyloxygruppe, ein Halogenatom, eine Hydroxylgruppe oder ein Wasserstoffatom bedeuten und w, x, y, z 0, 1, 2, 3 oder 4 und $w + x + y + z$ gleich 4 ist und mindestens einer der Reste $R^{13}$, $R^{14}$, $R^{15}$, $R^{16}$ eine $C_1$-$C_{20}$-Amino-, Phosphino-, Thiol- oder halogenhaltige Gruppe, wie zum Beispiel eine $C_1$-$C_{20}$-Aminogruppe, eine $C_1$-$C_{20}$-Alkylaminogruppe, $C_1$-$C_{20}$-Alkylaminoalkylgruppe, eine $C_5$-$C_{20}$-Arylaminogruppe, $C_1$-$C_{20}$-Phosphinogruppe, eine $C_1$-$C_{20}$-Alkylphosphinogruppe, $C_1$-$C_{20}$-Alkylphosphinoalkylgruppe, eine $C_5$-$C_{20}$-Arylphosphinogruppe, eine Thiolgruppe, eine $C_5$-$C_{20}$-Arylthiolgruppe, eine $C_2$-$C_{20}$-Alkenylthiolgruppe, eine $C_1$-$C_{20}$-Alkylthiolgruppe, eine $C_1$-$C_{20}$-Alkylthioalkylgruppe, eine $C_1$-$C_{20}$-Alkylthioarylgruppe, eine $C_5$-$C_{20}$-Arylthioalkenylgruppe, ein Fluoratom, eine $C_1$-$C_{20}$-Fluoroalkylgruppe, eine $C_5$-$C_{20}$-Fluoroarylgruppe oder eine $C_2$-$C_{20}$-Fluoroalkenylgruppe ist und wobei einer der Reste $R^{13}$ bis $R^{16}$ zwei siliziumorgani-

sche Einheiten verbrücken kann.

In Formel VI gilt bevorzugt $R^{13}$, $R^{14}$, $R^{15}$, $R^{16}$ unabhängig voneinander gleich oder verschieden eine $C_1$-$C_{20}$-Alkylgruppe, $C_2$-$C_{20}$-Alkenylgruppe, eine $C_5$-$C_{30}$-Arylalkylgruppe, eine $C_5$-$C_{30}$-Arylalkenylgruppe, eine $C_1$-$C_{20}$-Alkyloxygruppe, ein Halogenatom, eine Hydroxylgruppe oder ein Wasserstoffatom bedeuten und w, x, y, z 0, 1, 2, 3 oder 4 und $w + x + y + z$ gleich 4 ist und mindestens einer der Reste $R^{13}$, $R^{14}$, $R^{15}$, $R^{16}$ eine $C_1$-$C_{20}$-Amino-, Phosphino-, Thiol- oder halogenhaltige Gruppe, wie zum Beispiel eine $C_1$-$C_{20}$-Alkylaminogruppe, $C_1$-$C_{20}$-Alkylaminoalkylgruppe, eine $C_5$-$C_{20}$-Arylaminogruppe, eine $C_1$-$C_{20}$-Alkylphosphinogruppe, $C_1$-$C_{20}$-Alkylphosphinoalkylgruppe, eine $C_5$-$C_{20}$-Arylphosphinogruppe, eine $C_5$-$C_{20}$-Arylthiolgruppe, eine $C_2$-$C_{20}$-Alkenylthiolgruppe, eine $C_1$-$C_{20}$-Alkylthiolgruppe, eine $C_1$-$C_{20}$-Alkylthioalkylgruppe, eine $C_1$-$C_{20}$-Alkylthioarylgruppe, eine $C_5$-$C_{20}$-Arylthioalkenylgruppe, ein Fluoratom, eine $C_1$-$C_{20}$-Fluoroalkylgruppe oder eine $C_5$-$C_{20}$-Fluoroarylgruppe ist.

In Formel VI gilt ganz besonders bevorzugt $R^{13}$, $R^{14}$, $R^{15}$, $R^{16}$ unabhängig voneinander gleich oder verschieden eine $C_1$-$C_{20}$-Alkylgruppe, $C_2$-$C_{20}$-Alkenylgruppe, eine $C_1$-$C_{20}$-Alkyloxygruppe, ein Halogenatom, oder ein Wasserstoffatom bedeuten und w, x, y, z 0, 1, 2, 3 oder 4 und $w + x + y + z$ gleich 4 ist und mindestens einer der Reste $R^{13}$, $R^{14}$, $R^{15}$, $R^{16}$ eine thiolhaltige Gruppe, wie zum Beispiel eine $C_5$-$C_{20}$-Arylthiolgruppe, eine $C_2$-$C_{20}$-Alkenylthiolgruppe, eine $C_1$-$C_{20}$-Alkylthiolgruppe, eine $C_1$-$C_{20}$-Alkylthioalkylgruppe, eine $C_1$-$C_{20}$-Alkylthioarylgruppe oder eine $C_5$-$C_{20}$-Arylthioalkenylgruppe ist.

Beispiele für die erfindungsgemäße Siliziumorganische Verbindung sind

3,3,3-Trifluoropropyltrichlorosilan
1H, 1H, 2H, 2H,-Perfluorodecyltrichlorosilan
1H, 1H, 2H, 2H,-Perfluorooctyltrichlorosilan
2-(Diphenylphophino)ethyltriethoxysilan
3-Aminopropyldimethylethoxysilan
4-Aminobutyldimethyoxysilan
(Heptafluoroisopropoxy)propylmethyldichlorosilan
Bis(3-(Triethoxysilyl)propyl)amin
Bis-(3-(trimethoxysilyl)propyl)ethylendiamin
Methylthioldimethylethoxysilan
3-Propyl-thioltrimethoxysilan
3-Propyl-thioltriethoxysilan
2-Ethyl-thioltriethoxysilan
3-Diethylaminopropyltrimethoxysilan
N,N-Dimethyl-3-aminopropyltriethoxysilan
3-(2-Imidazolin-1-yl)propyltriethoxysilan
N,N-Dibutyl-4-aminobutyltrimethoxysilan
N-Hexyl-N-methyl-3-aminopropyltrimethoxysilan
Ethylthiolmethyldiethoxysilan
6-Hexylthioltriethoxysilan
8-Octylthiolmethyldimethoxysilan
Bis(3-propylthiol)-diethoxysilan
Methylthiolmethyldimethoxysilan

Die Modifizierung des Trägers erfolgt in der Weise, daß man das Trägermaterial in einem geeigneten Lösungsmittel, wie Pentan, Hexan, Heptan, Toluol oder Dichlormethan, suspendiert und zu dieser Suspension eine Lösung der siliziumorganischen Verbindung langsam zutropfen läßt und bei der Siedetemperatur des Lösungsmittels für mehrere Stunden reagieren läßt. Bei Raumtemperatur wird das nun modifizierte Trägermaterial mittels Filtration, Waschung und Trocknung nachbehandelt. Die Trocknung erfolgt bei 20 bis 140°C und 0.01 bis 0.001 bar. Die Reaktionstemperatur beträgt bevorzugt -20 bis + 150°C, insbesondere 40 bis 150°C. Die Reaktionszeit beträgt 1 bis 36 Stunden, bevorzugt 1-3 Stunden. Es wird vorzugsweise im äquimolaren Bereich bezüglich des Gehalts an reaktiven Gruppen auf der Oberfläche des Trägermaterials gearbeitet. Die Reaktion wird unter Inertbedingungen durchgeführt.

Man erhält einen erfindungsgemäß modifizierten Träger, der dadurch charakterisiert ist, daß dessen Anteil an reaktiven Gruppen auf der Trägeroberfläche, die für die Metallocenkomponente des erfindungsgemäßen Katalysators ein Gift darstellen können, durch die zuvor beschriebene Behandlung reduziert worden ist. Erfindungsgemäß beschreibt der Ausdruck modifizierter Träger, einen Träger, der wie vorstehend beschreiben behandelt worden ist. Zur Herstellung des erfindungsgemäßen Katalysatorsystems wird die modifizierte Trägerkomponente mit mindestens einer Metallocen- und bevorzugt mit mindestens einer Cokatalysatorkomponente umgesetzt. Die Umsetzung erfolgt in einem geeigneten Lösungsmittel wie Pentan, Heptan, Toluol, Dichlormethan oder Dichlorbenzol, in dem die inertisierte Trägerkomponente suspendiert wird und mit einer Lösung der Metallocen- und Cokatalysatorkomponente vermischt wird oder bevorzugt so, daß 110 bis 370 % des Porenvolumens der Trägerkomponente als Lösung der Metallocen- und

Cokatalysatorkomponente insgesamt zugegeben werden. Die Herstellung des erfindungsgemäßen Katalysatorsystems wird bei -20 bis 150°C, bevorzugt bei 20 bis 50°C und einer Kontaktzeit zwischen 15 Minuten und 25 Stunden, bevorzugt zwischen 15 Minuten und 15 Stunden durchgeführt.

Man erhält das erfindungsgemäße Katalysatorsystem mit einem Metallocengehalt, bevorzugt Zirkoniumgehalt von 0.001 bis 2 mmol Zr/$g_{Träger}$, bevorzugt von 0.01 bis 0.5 mmol Zr/$g_{Träger}$, besonders bevorzugt 0.01 bis 0.1 mmol Zr/$g_{Träger}$. Wird mindestens ein Aluminoxan als Cokatalysatorkomponente verwendet liegt das Aluminium/Zirkoniumverhältnis zwischen 50 : 1 und 1000 : 1 (Al : Zr), bevorzugt von 100 : 1 bis 700 : 1 (Al:Zr). Werden Borverbindungen als Cokatalysatorkomponente verwendet liegt das Bor/Zirkoniumverhältnis im Bereich von 1 : 1 bis 50 : 1 (B : Zr), bevorzugt von 1 : 1 bis 10 : 1 (B:Zr).

Mit dem erfindungsgemäßen Katalysatorsystem werden Polymere, wie Polypropylen mit hoher Stereo- und Regiospezifität in außerordentlich hoher Aktivität erhalten.

Die vorliegende Erfindung betrifft auch ein Verfahren zur Herstellung eines Polyolefins durch Polymerisation eines oder mehrerer Olefine in Gegenwart des erfindungsgemäßen Katalystorsystems, enthaltend mindestens einen modifizierten Träger. Unter dem Begriff Polymerisation wird eine Homopolymerisation wie auch eine Copolymerisation verstanden.

Bevorzugt werden Olefine der Formel $R^{17}$-CH=CH-$R^{18}$ polymerisiert, worin $R^{17}$ und $R^{18}$ gleich oder verschieden sind und ein Wasserstoffatom oder einen kohlenstoffhaltigen Rest mit 1 bis 20 C-Atomen, insbesondere 1 bis 10 C-Atomen, bedeuten, und $R^{17}$ und $R^{18}$ zusammen mit den sie verbindenen Atomen einen oder mehrere Ringe bilden können. Beispiele für solche Olefine sind 1-Olefine mit 2 bis 40, vorzugsweise 2 bis 10 C-Atomen, wie Ethylen, Propen, 1-Buten, 1-Penten, 1-Hexen, 4-Methyl-1-penten oder 1-Octen, Styrol, Diene wie 1,3-Butadien, 1,4-Hexadien, Vinylnorbornen oder Norbornadien und cyclische Olefine wie Norbornen, Tetracyclododecen oder Methylnorbornen. Bevorzugt werden in dem erfindungsgemäßen Verfahren Ethen oder Propen homopolymerisiert, oder Ethen mit einem oder mehreren 1-Olefinen mit 3 bis 20 C-Atomen, wie Propen, und/oder einem oder mehreren Dienen mit 4 bis 20 C-Atomen, wie 1,4-Butadien oder Norbornadien, copolymerisiert. Beispiele solcher Copolymere sind Ethen/Propen-Copolymere und Ethen/Propen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisationszeit beträgt von 10 Minuten bis 10 Stunden, bevorzugt von 30 Minuten bis 120 Minuten.

Die Polymerisation kann in Lösung, in Masse, in Suspension oder in der Gasphase, kontinuierlich oder diskontinuierlich, ein-oder mehrstufig durchgeführt werden.

Bevorzugt enthält das in dem erfindungsgemäßen Verfahren eingesetzte Katalysatorsystem eine Übergangsmetallverbindung der Metallocenkomponente. Es können auch Mischungen zweier oder mehrerer Übergangsmetallverbindungen der Metallocenkomponente eingesetzt werden, beispielsweise zur Herstellung von Polyolefinen mit breiter oder multimodaler Molmassenverteilung und sogenannten Reaktorblends.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.

Das geträgerte Katalysatorsystem kann als Pulver oder noch mit Lösemittel behaftet in einem inerten Suspensionsmittel wieder resuspendiert werden. Die Suspension kann in das Polymerisationssystem eingeführt werden.

Vor der Zugabe des erfindungsgemäßen geträgerten Katalysatorsystems in das Polymerisationsystem ist eine Reinigung des Olefins mit einer Aluminiumalkylverbindung, wie beispielsweise Trimethylaluminium, Triethylaluminium, Triisobutylaluminium, Trioctylaluminium, Isoprenylaluminium oder Aluminoxane oder Boralkyl und -arylverbindungen zur Inertisierung des Polymerisationssystems (beispielsweise zur Abtrennung vorhandener Katalysatorgifte im Olefin) vorteilhaft. Diese Reinigung kann sowohl im Polymerisationssystem selbst erfolgen, oder das Olefin wird vor der Zugabe in das Polymerisationsystem mit der Al-Verbindung in Kontakt gebracht und anschließend wieder getrennt. Wird diese Reinigung im Polymerisationssystem selbst durchgeführt, wird die Aluminiumalkylverbindung in einer Konzentration von 0,01 bis 100 mmol Al pro kg Reaktorinhalt dem Polymerisationssystem zugesetzt. Bevorzugt werden Triisobutylaluminium und Triethylaluminium in einer Konzentration von 0,1 bis 10 mmol Al pro kg Reaktorinhalt eingesetzt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Dabei wird das Katalysatorsystem in einer Konzentration, bezogen auf das Übergangsmetall von bevorzugt $10^{-3}$ bis $10^{-8}$, besonders bevorzugt $10^{-4}$ bis $10^{-7}$ mol Übergangsmetall pro $dm^3$ Lösemittel bzw. pro $dm^3$ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Es wird beispielsweise in einem aliphatischen oder cycloaliphatischen Kohlenwasserstoff gearbeitet; als solcher sei beispielsweise Propan, Butan, Hexan, Heptan, Isooctan, Cyclohexan, Methylcyclohexan genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur

geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern wie beispielsweise Rohre geeignet.

Mit dem erfindungsgemäßen Katalysatorsystem wird eine Katalysatoraktivität von 100 bis 350 kg PP/g Metallocen xh bei einem Cokatalysator: Metallocen-Verhältnis < 400 : 1 erreicht. Die erfindungsgemäßen Polymere weisen Schmelzpunkte von 143 bis 165°C auf.

Die Erfindung wird anhand der nachfolgenden Beispiele näher erläutert.

Beispiele

Allgemeine Angaben:

Die Herstellung und Handhabung der organometallischen Verbindungen erfolgte unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließender Destillation unter Argon absolutiert. Als sphärische, poröse Trägermaterialien wurden Silicas eingesetzt wie MS-Typen der Fa. PQ Corporation, ES- oder EP-Typen der Fa. Crosfield, oder Silica-Typen 948, 952, 955 der Fa. Grace Davisson oder ähnliche. Die Verbindungen wurden mit $^1$H-NMR, $^{13}$C-NMR und IR-Spektroskopie charakterisiert.

Beispiel 1

Modifizierung des Trägermaterials:

50 g $SiO_2$ (MS 3030, Fa. PQ, getrocknet bei 140°C und 10 mbar) wurden in 260 ml Toluol suspendiert und tropfenweise unter Rühren langsam mit 25 g Mercaptopropyl(trimethoxy)silan versetzt. Unter Rückfluß wurde diese Mischung 20 h gerührt. Die Suspension wurde filtriert. Der Feststoff wurde dreimal mit je 200 ml Methanol gewaschen und im Ölpumpenvakuum bis zur Gewichtskonstanz getrocknet.

Herstellung des geträgerten Katalysatorsystems:

Eine Lösung von 10 mg (0,016 mmol) Dimethylsilandiylbis(2-methyl-4-phenylindenyl)zirkoniumdichlorid mit 1 $cm^3$ 30%iger (4,81 mmol) Methylaluminoxanlösung in Toluol wird mit 1 g des modifizierten Trägermaterials, resuspendiert in 5 ml Toluol, vermischt. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 3,3 kg Polypropylen-Pulver. Der Reaktor zeigte keine Beläge an Innenwand oder Rührer. Die Katalysatoraktivität betrug 330 kg PP/g Metallocen xh.

Beispiel 2

Modifizierung des Trägermaterials:

10 g $SiO_2$ (MS 3030, Fa. PQ, getrocknet bei 140°C und 10 mbar) wurden in 60 ml Toluol suspendiert und tropfenweise unter Rühren langsam mit 3,8 g Mercaptomethyl(diethoxy)methylsilan versetzt. Unter Rückfluß wurde diese Mischung 20 h gerührt. Die Suspension wurde filtriert. Der Feststoff wurde dreimal mit je 20 ml Methanol gewaschen und im Ölpumpenvakuum bis zur Gewichtskonstanz getrocknet.

Herstellung des geträgerten Katalysatorsystems:

Eine Lösung von 10 mg (0,016mmol) Dimethylsilandiylbis(2-methyl-4-phenylindenyl)zirkoniumdichlorid mit 1 $cm^3$

30%iger (4,81 mmol) Methylaluminoxanlösung in Toluol wird mit 1 g des modifizierten Trägermaterials, resuspendiert in 5 ml Toluol, vermischt. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 2,9 kg Polypropylen-Pulver. Der Reaktor zeigte keine Beläge an Innenwand oder Rührer. Die Katalysatoraktivität betrug 290 kg PP/g Metallocen xh.

Beispiel 3

Modifizierung des Trägermaterials:

10 g $SiO_2$ (MS 3030, Fa. PQ, getrocknet bei 140°C und 10 mbar) wurden in 60 ml Toluol suspendiert und tropfenweise unter Rühren langsam mit 4,8 g Mercaptopropylmethyl(dimethoxy)silan versetzt. Unter Rückfluß wurde diese Mischung 20 h gerührt. Die Suspension wurde filtriert. Der Feststoff wurde dreimal mit je 20 ml Methanol gewaschen und im Ölpumpenvakuum bis zur Gewichtskonstanz getrocknet.

Herstellung des geträgerten Katalysatorsystems:

Eine Lösung von 10 mg (0,016 mmol) Dimethylsilandiylbis(2-methyl-4-phenylindenyl)zirkoniumdichlorid mit 1 $cm^3$ 30%iger (4,81 mmol) Methylaluminoxanlösung in Toluol wird mit 1 g des modifizierten Trägermaterials, resuspendiert in 5 ml Toluol, vermischt. Die Suspension wurde 1 h bei Raumtemperatur gerührt und dann wurde das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-dm3-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet.
Es resultierten 3,1 kg Polypropylen-Pulver. Der Reaktor zeigte keine Beläge an Innenwand oder Rührer. Die Katalysatoraktivität betrug 310 kg PP/g Metallocen xh.

Beispiel 4

Modifizierung des Trägermaterials:

10 g $SiO_2$ (MS 3030, Fa. PQ, getrocknet bei 140°C und 10 mbar) wurden in 60 ml Toluol suspendiert und tropfenweise unter Rühren langsam mit 3,6 g (Mercaptopropyl)(methyl)(dimethoxy)silan versetzt. Unter Rückfluß wurde diese Mischung 15 h gerührt. Die Suspension wurde filtriert. Der Feststoff wurde dreimal mit je 100 ml Methanol gewaschen und im Ölpumpenvakuum bis zur Gewichtskonstanz getrocknet.

Herstellung des geträgerten Katalysatorsystems:

15 mg (0,032 mmol) Dimethylsilandiylbis(2-methylindenyl)zirkoniumdichlorid wurden mit 2 $cm^3$ 30%iger (9,62 mmol) Methylaluminoxanlösung in Toluol vermischt und 5 h gerührt. Dann wurde 2 g des modifizierten Trägermaterials und weitere 5 ml Toluol dazugegeben. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde

in Toluol resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 1,7 kg Polypropylen-Pulver. Der Reaktor zeigte keine Beläge an Innenwand oder Rührer. Die Katalysatoraktivität betrug 113 kg PP/g Metallocen xh.

Beispiel 5

Modifizierung des Trägermaterials:

10 g $SiO_2$ (MS 3030, Fa. PQ, getrocknet bei 140°C und 10 mbar) wurden in 100 ml Toluol suspendiert und tropfenweise unter Rühren langsam mit 4 g Methoxypropyl(trimethoxy)silan versetzt. Unter Rückfluß wurde diese Mischung 15 h gerührt. Die Suspension wurde filtriert. Der Feststoff wurde dreimal mit je 100 ml Methanol gewaschen und im Ölpumpenvakuum bis zur Gewichtskonstanz getrocknet.

Herstellung des geträgerten Katalysatorsystems:

15 mg (0,032 mmol) Dimethylsilandiylbis(2-methylindenyl)zirkoniumdichlorid wurden mit 2 $cm^3$ 30%iger (9,62 mmol) Methylaluminoxanlösung in Toluol vermischt und 5 h gerührt. Dann wurde 2 g des modifizierten Trägermaterials und weitere 5 ml Toluol dazugegeben. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-dm3-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet. Es resultierten 1,5 kg Polypropylen-Pulver. Der Reaktor zeigte keine Beläge an Innenwand oder Rührer. Die Katalysatoraktivität betrug 100 kg PP/g Metallocen xh.

Beispiel 6

Modifizierung des Trägermaterials:

10 g $SiO_2$ (MS 3030, Fa. PQ, getrocknet bei 140°C und 10 mbar) wurden in 100 ml Toluol suspendiert und tropfenweise unter Rühren langsam mit 4 g Methoxypropyl(trimethoxy)silan versetzt. Unter Rückfluß wurde diese Mischung 15 h gerührt. Die Suspension wurde filtriert. Der Feststoff wurde dreimal mit je 100 ml Methanol gewaschen und im Ölpumpenvakuum bis zur Gewichtskonstanz getrocknet.

Herstellung des geträgerten Katalysatorsystems:

10 mg (0,016 mmol) Dimethylsilandiylbis(2-methyl-4-phenylindenyl)zirkoniumdichlorid wurden mit 1 $cm^3$ 30%iger (4,81 mmol) Methylaluminoxanlösung in Toluol vermischt und 5 h gerührt. Dann wurde 1 g des modifizierten Trägermaterials und weitere 5 ml Toluol dazugegeben. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-dm3-Reaktor zunächst mit Stickstoff und anschließend mit Propylen gespült und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten. Gestoppt wurde die Polymerisation durch Abgasen des restlichen Propylens. Das Polymer wurde im Vakuumtrockenschrank getrocknet.

Es resultierten 2,7 kg Polypropylen-Pulver. Der Reaktor zeigte keine Beläge an Innenwand oder Rührer. Die Katalysatoraktivität betrug 270 kg PP/g Metallocen xh.

Vergleichsbeispiel 1

Modifizierung des Trägermaterials:

8,28 g $SiO_2$ wurden mit einer Lösung aus 2,96 g (12 mmol) Chlormethylphenyltrimethoxysilan in 40 ml Toluol vermischt und 2 h bei 115°C erhitzt. Danach wurden im Ölpumpenvakuum 10 ml flüchtige Bestandteile entfernt und die restliche Suspension 1 h auf 115°C erhitzt. Nach dem Abkühlen wurde filtriert, viermal mit Diethylether gewaschen und 12 h im Hochvakuum getrocknet. Man erhielt 8,7 g des funktuionalisierten Trägers.

2,55 g dieses funktionalisierten Trägers wurden bei 70°C unter Argon mit 15 ml Trimethylchlorsilan versetzt. Man filtrierte ab und wusch zweimal mit je 20 ml Toluol und zweimal mit je 20ml Diethylether. 12 h wurde dann der funktionalisierte Träger im Hochvakuum getrocknet.

Herstellung des geträgerten Katalysatorsystems:

10 mg (0,016 mmol) Dimethylsilandiylbis(2-methyl-4-phenylindenyl)zirkoniumdichlorid wurden mit 1 $cm^3$ 30%iger (4,81 mmol) Methylaluminoxanlösung in Toluol vermischt und 5 h gerührt. Dann wurde 1g des funktionalisierten Trägers dazu gegeben und 1 h gerührt. Lösungsmittelreste wurden dann im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-$dm^3$-Reaktor zunächst mit Stickstoff und anschließend mit Propylen gespült und mit 10 $dm^3$ flüssigem Propylen befüllt.

Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt. Anschließend wurde die Katalysator-Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Es resultierten 7 g Polypropylen-Pulver. Die Katalysatoraktivität betrug 0,7 kg PP/g Metallocen xh.

Vergleichsbeipiel 2

Modifizierung des Trägermaterials:

10 g $SiO_2$ wurden mit einer Lösung aus 5 g (20 mmol) Chlormethylphenyltrimethoxysilan in 60 ml Toluol vermischt und 20 h unter Rückfluß erhitzt. Die Suspension wurde abfiltriert und dreimal mit je 20 ml Methanol gewaschen und Lösungsmittelreste im Ölpumpenvakuum entfernt.

Herstellung des geträgerten Katalysatorsystems:

Die Lösung von 10 mg (0,016 mmol) Dimethylsilandiylbis(2-methyl-4-phenylindenyl)zirkoniumdichlorid und 1 $cm^3$ 30%iger (4,81 mmol) Methylaluminoxanlösung in Toluol wurde mit 1 g des modifizierten Trägermaterials, resuspendiert in 5 ml Toluol, vermischt. Die Suspension wurde 1 h bei Raumtemperatur gerührt und dann das Lösungsmittel im Ölpumpenvakuum bis zur Gewichtskonstanz entfernt. Zum Einschleusen in das Polymerisationssystem wurde in Toluol resuspendiert.

Polymerisation:

Parallel dazu wurde ein trockener 16-$dm^3$-Reaktor zunächst mit Stickstoff und anschließend mit Propylen gespült

und mit 10 $dm^3$ flüssigem Propylen befüllt. Dann wurden 3 $cm^3$ Triisobutylaluminium (pur, 12 mmol) mit 30 $cm^3$ Hexan verdünnt in den Reaktor gegeben und der Ansatz bei 30°C 15 Minuten gerührt.

Anschließend wurde die Katalysator-Suspension in den Reaktor gegeben. Das Reaktionsgemisch wurde auf die Polymerisationstemperatur von 65°C aufgeheizt (4°C/min) und das Polymerisationssystem 1 h durch Kühlung bei 65°C gehalten. Gestoppt wurde die Polymerisation durch Abgasen des restlichen Propylens. Es konnte kein Polypropylen erhalten werden.

**Patentansprüche**

1. Geträgertes Katalysatorsystem, enthaltend, mindestens eine Metallocenkomponente und mindestens eine Cokatalysatorkomponente und mindestens ein modifiziertes anorganisches Oxid von Silizium, Aluminium oder Gemischen davon, wobei das modifizierte Oxid mindestens eine der Gruppen Stickstoff, Fluor, Phosphor oder Schwefel enthaltende organische Silizium-Reste enthält.

2. Geträgertes Katalysatorsystem nach Anspruch 1, wobei das modifizierte anorganische Oxid gleiche oder verschiedene Gruppen mit der allgemeinen Formel

$$-SiR_n$$

enthält, worin R gleich oder verschieden eine $C_1$-$C_{20}$-kohlenwasserstoffhaltige Gruppe, wie eine $C_1$-$C_{20}$-Alkylgruppe, $C_2$-$C_{20}$-Alkenylgruppe, $C_5$-$C_{30}$-Arylgruppe, $C_5$-$C_{30}$-Arylalkylgruppe, $C_5$-$C_{30}$-Arylalkenylgruppe, $C_5$-$C_{30}$-Alkylarylgruppe, $C_1$-$C_{20}$-Alkoxygruppe, $C_1$-$C_{20}$-Alkenyloxygruppe, $C_5$-$C_{30}$-Aryloxygruppe, $C_1$-$C_{20}$-Alkoxyalkylgruppe, $C_5$-$C_{30}$-Alkylaryloxygruppe, $C_5$-$C_{30}$-Arylalkylgruppe bedeuten und mindestens einer der Reste eine $C_1$-$C_{20}$-Amino-, Phosphino-, Thio- oder Halogenhaltige Gruppe, wie $C_1$-$C_{20}$-Aminogruppe, $C_1$-$C_{20}$-Alkylaminogruppe, $C_1$-$C_{20}$-Alkylaminoalkylgruppe, $C_5$-$C_{20}$-Arylaminogruppe, $C_1$-$C_{20}$-Phosphinogruppe, $C_1$-$C_{20}$-Alkylphosphinogruppe, $C_1$-$C_{20}$-Alkylphosphinoalkylgruppe, $C_5$-$C_{20}$-Arylphosphinogruppe, Thiolgruppe, $C_5$-$C_{20}$-Arylthiolgruppe, $C_2$-$C_{20}$-Alkenylthiolgruppe, $C_1$-$C_{20}$-Alkylthiolgruppe, $C_1$-$C_{20}$-Alkylthioalkylgruppe, $C_1$-$C_{20}$-Alkylthioarylgruppe, $C_5$-$C_{20}$-Arylthioalkenylgruppe, $C_1$-$C_{20}$-Fluoralkylgruppe, $C_5$-$C_{20}$-Fluoroarylgruppe oder $C_2$-$C_{20}$-Fluoralkenylgruppe ist und n eine ganze Zahl von 1 bis 3 ist.

3. Geträgertes Katalysatorsystem nach Anspruch 1 oder 2, wobei R mindestens eine thiohaltige Gruppe, wie eine Thiolgruppe, $C_5$-$C_{20}$-Arylthiolgruppe, $C_2$-$C_{20}$-Alkenylthiolgruppe, $C_1$-$C_{20}$-Alkylthiolarylgruppe oder $C_5$-$C_{20}$-Arylthioalkenylgruppe ist.

4. Geträgertes Katalysatorsystem nach einem oder mehreren der Ansprüche 1 bis 3, wobei die Metallocenkomponente bevorzugt ein Metallocen der nachstehenden Formel I

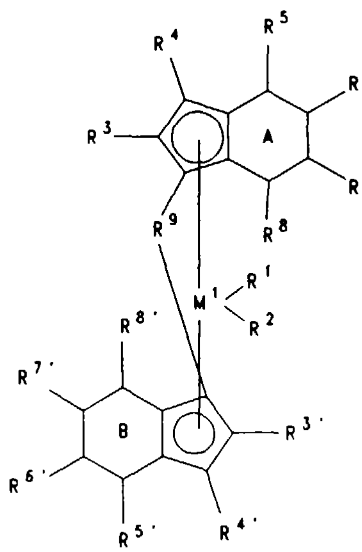

(I)

worin

$M^1$ ein Metall der Gruppe IVb des Periodensystems der Elemente ist,

$R^1$ und $R^2$ gleich oder verschieden sind und ein Wasserstoffatom, eine$C_1$-$C_{10}$-Alkylgruppe, eine $C_1$-$C_{10}$-Alkoxygruppe, eine $C_6$-$C_{20}$-Arylgruppe, eine $C_6$-$C_{10}$-Aryloxygruppe, eine $C_2$-$C_{10}$-Alkenylgruppe, eine OH-Gruppe, eine $NR^{12}{}_2$-Gruppe, wobei $R^{12}$ eine $C_1$ bis $C_{10}$-Alkylgruppe oder $C_6$ bis $C_{14}$-Arylgruppe ist, oder ein Halogenatom bedeuten,

$R^3$ bis $R^8$ und $R^{3'}$ bis $R^{8'}$ gleich oder verschieden sind und ein Wasserstoffatom, eine $C_1$-$C_{40}$-Kohlenwasserstoffgruppe, die linear, cyclisch oder verzweigt sein kann, wie eine $C_1$-$C_{10}$-Alkylgruppe, $C_2$-$C_{10}$-Alkenylgruppe, $C_6$-$C_{20}$-Arylgruppe, eine $C_7$-$C_{40}$-Arylalkylgruppe, eine $C_7$-$C_{40}$-Alkylarylgruppe oder eine $C_8$-$C_{40}$-Arylalkenylgruppe, bedeuten, oder benachbarte Reste $R^4$ bis $R^8$ und/oder $R^{4'}$ bis $R^{8'}$ mit den sie verbindenden Atomen ein Ringsystem bilden,

$R^9$ eine Verbrückung bedeutet, bevorzugt

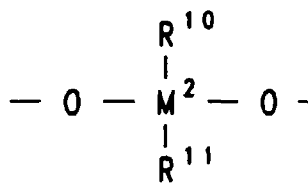 , 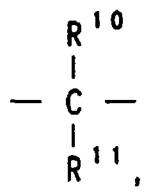 , 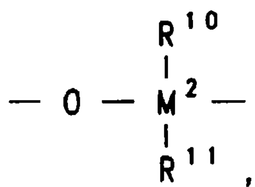 , 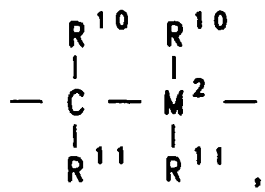 ,

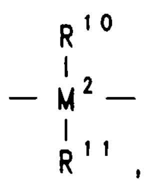 , 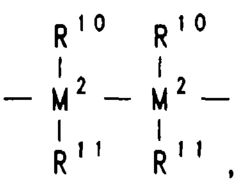 , 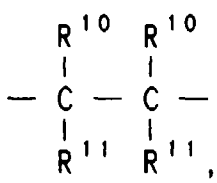 , 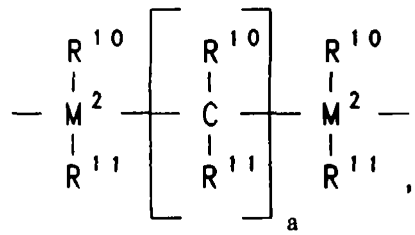 ,

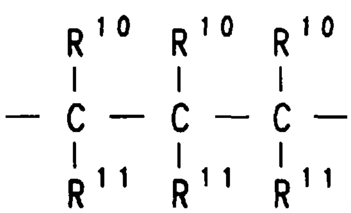 ,

wobei $R^{10}$ und $R^{11}$ gleich oder verschieden sind und ein Wasserstoffatom, ein Halogenatom oder eine $C_1$-$C_{40}$-kohlenstoffhaltige Gruppe ist wie eine $C_1$-$C_{20}$-Alkyl-, eine $C_1$-$C_{10}$-Fluoralkyl-, eine $C_1$-$C_{10}$-Alkoxy-, eine $C_6$-$C_{14}$-Aryl-, eine $C_6$-$C_{10}$-Fluoraryl-, eine $C_6$-$C_{10}$-Aryloxy-, eine $C_2$-$C_{10}$-Alkenyl-, eine $C_7$-$C_{40}$-Arylalkyl-, eine $C_7$-$C_{40}$-Alkylaryl-, oder eine $C_8$-$C_{40}$-Arylalkenylgruppe oder $R^{10}$ und $R^{11}$ jeweils mit den sie verbindenden Atomen einen oder mehrere Ringe bilden und a eine ganze Zahl von Null bis 18 ist,

$M^2$ Silizium, Germanium oder Zinn ist, und die Ringe A und B gleich oder verschieden, gesättigt oder ungesättigt sind.

$R^9$ kann auch zwei Einheiten der Formel I miteinander verknüpfen.

5. Geträgertes Katalysatorsystem nach einem oder mehreren der Ansprüche 1 bis 4, wobei die Cokatalysatorkomponente mindestens eine Verbindung vom Typ eines Aluminoxans oder einer Lewis-Säure oder einer ionischen Verbindung ist, die durch Reaktion mit einem Metallocen dieses in eine kationische Verbindung überführt.

6. Geträgertes Katalysatorsystem nach einem oder mehreren der Ansprüche 1 bis 5, wobei zusätzlich eine aluminiumorganische Verbindung enthalten ist.

7. Verfahren zur Herstellung eines geträgerten Katalysatorsystems nach einem oder mehreren der Ansprüche 1 bis

6, wobei mindestens ein Metallocen und mindestens ein modifizierter Träger gemischt werden und das Katalysatorsystem als Pulver oder mit Lösemittel behaftet erhalten wird.

**8.** Verfahren zur Herstellung eines Polymeren in Gegenwart mindestens eines geträgerten Katalysatorsystems nach einem oder mehreren der Ansprüche 1 bis 6.

**9.** Verwendung eines geträgerten Katalysatorsystems nach einem oder mehreren der Ansprüche 1 bis 6 für die Polymerisation von Olefinen.

**10.** Verwendung eines Polymeren hergestellt nach Anspruch 9 zur Herstellung von Formkörpern wie Folien, Platten, Großhohlkörpern und Rohren.

Europäisches Patentamt

# EUROPÄISCHER RECHERCHENBERICHT

Nummer der Anmeldung
EP 97 10 8455

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | EP 0 757 992 A (REPSOL)<br>* Beispiele 2A-2C *<br>* Beispiele 7-9 *<br>* Ansprüche 1,3,4 *<br>* Seite 3, Zeile 10 - Seite 5, Zeile 34 *<br>--- | 1-3,5-10 | C08F4/02<br>C08F10/00<br>C08F4/60 |
| P,X | EP 0 727 443 A (TOSOH)<br>* Beispiel 1 *<br>* Seite 10, Zeile 34 - Seite 11, Zeile 47 *<br>--- | 1,2,4-10 | |
| X | EP 0 676 418 A (BP CHEMICALS)<br>* Beispiele 4-14 *<br>--- | 1,2,5-10 | |
| Y | US 5 006 619 A (PULLUKAT THOMAS)<br>* Beispiele 1,2 *<br>* Anspruch 1 *<br>--- | 1,2,4,5,<br>7-10 | |
| D,Y | EP 0 206 794 A (EXXON)<br>* Ansprüche 1-3,5,8 *<br>* Seite 4, Zeile 26 - Seite 5, Zeile 21 *<br>----- | 1,2,4,5,<br>7-10 | RECHERCHIERTE SACHGEBIETE (Int.Cl.6)<br>C08F |

Der vorliegende Recherchenbericht wurde für alle Patentansprüche erstellt

| Recherchenort | Abschlußdatum der Recherche | Prüfer |
|---|---|---|
| DEN HAAG | 3.September 1997 | Fischer, B |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)